# EUROPÄISCHE PATENTSCHRIFT

(11) **EP 0 551 587 B1**
(45) Veröffentlichungstag und Bekanntmachung des Hinweises auf die Patenterteilung: **13.09.1995**
(21) Anmeldenummer: 92119546.7
(22) Anmeldetag: 16.11.1992
(51) Int. Cl.: F16L 17/04

(54) **Rohrkupplung**
Pipe coupling
Raccord de tuyaux

(30) Priorität: 15.01.1992 CH 109/92
(43) Veröffentlichungstag der Anmeldung: 21.07.1993
(73) Patentinhaber: STRAUB FEDERNFABRIK AG, CH-7323 Wangs (CH)
(72) Erfinder: Straub, Immanuel, CH-7323 Wangs (CH)
(74) Vertreter: Patentanwälte Schaad, Balass, Menzl & Partner AG

(56) Entgegenhaltungen:
- CH-A- 541 763
- DE-A- 3 826 114
- DE-C- 546 099
- US-A- 4 119 333

## Beschreibung

Die vorliegende Erfindung betrifft eine Rohrkupplung gemäss dem Oberbegriff des Anspruchs 1.

Eine Rohrkupplung dieser Art ist aus der DE-A-27 31 465 bzw. der entsprechenden US-A-4,119,333 und DE-A-3 826 114 bekannt. Die sich gegeneinander erstreckenden Dichtlippen einer im Querschnitt C-förmigen Elastomer-Dichtungsmanschette sind über einen im Umfangssinn vorgespannten Schraubenfederring am Manschettensteg abgestützt. Diese Ausbildung der Dichtlippenabstützung begrenzt die obere zulässige Betriebstemperatur der Rohrkupplung, da bei überhöhten Temperaturen die Gefahr besteht, dass die zur Druckdehnung der Manschette bei zusammengezogenem Gehäuse zusätzlich wirkende Wärmedehnung das Manschettenmaterial zwischen die Windungen des Schraubenfederrings fliessen lässt. Obwohl die Schraubenfederringe das Schwellen und Schwinden des Manschettenmaterials mindestens teilweise ausgleichen können, kann das Fliessen des Manschettenmaterials bei überhöhten Betriebstemperaturen und langen Druckperioden dazu führen, dass das Dichtvermögen der Rohrkupplung bei anschliessender Abkühlung auf niedere Temperaturen und geringen Druck nachlässt.

Bei Rohrkupplungen, wie sie beispielsweise aus der DE-A-24 28 101 bzw. der entsprechenden US-A-3,877,733 bekannt sind, werden die Dichtlippen über am Manschettensteg angeformte Ringwülste abgestützt. Mit einer derartigen Ausbildung der Manschette kann wohl das Fliessen des Materials bei langen Druckperioden und hohen Betriebstemperaturen verhindert werden, doch besteht die Gefahr, dass die Dichtlippen mit den Ringwülsten verkleben, was die optimale Anpassung der Manschette an die jeweiligen Betriebsbedingungen behindern kann.

Ausgehend von diesem Stand der Technik ist es deshalb eine Aufgabe der vorliegenden Erfindung, die gattungsgemässe Rohrkupplung derart weiterzubilden, dass sie für den Einsatz bei höheren Betriebstemperaturen geeignet ist.

Diese Aufgabe wird durch eine gattungsgemässe Rohrkupplung erfüllt, die die Merkmale des Anspruchs 1 aufweist.

Der im Querschnitt U-förmige und infolge der Schlitze mäanderförmige Federring stützt die Dichtlippe und sich am Manschettensteg beim Stauchen der Manschette infolge der Verengung des Gehäuses grossflächig ab. Der Federring ist insbesondere quer zu den Federschenkeln, d.h. in Umfangsrichtung, nachgiebig. Beim Zusammenziehen des Gehäuses verengen sich die Schlitze im Umfangssinne auf ein Minimum, und sie verkleinern sich weiter bei Volumenvergrösserung der Dichtungsmanschette infolge Erwärmung. Die Schlitze werden aber nie ganz durch Verengen geschlossen, so dass der Druck in der Ringnut immer gleich dem Druck des Mediums in den Rohren ist. Der Federring passt sich somit optimal an die jeweiligen Betriebsbedingungen an. Insbesondere verengen sich die Schlitze mit steigender Druck- und Wärmedehnung der Dichtungsmanschette, so dass bei grosser Dehnung die Dichtlippen praktisch ganzflächig abgestützt sind und kein Dichtungsmaterial durch die nun sehr schmalen Schlitze fliessen kann. Der Federring gleicht durch seine radiale und in Umfangsrichtung verlaufende Verformbarkeit die Volumenveränderungen der Manschette infolge der im Betrieb auftretenden Temperaturunterschiede aus.

Mit einer besonders bevorzugten Ausbildungsform der erfindungsgemässen Rohrkupplung gemäss Anspruch 2 wird jegliche Gefahr, dass die Dichtlippen mit dem Manschettensteg verkleben, gebannt.

Weitere bevorzugte Ausbildungsformen des Erfindungsgegenstandes sind in den verbleibenden abhängigen Ansprüchen angegeben.

Die vorliegende Erfindung wird nun anhand eines in der Zeichnung dargestellten Ausführungsbeispiels näher erläutert. Es zeigen rein schematisch:
- Fig. 1 und 2: in Ansicht bzw. Seitenansicht und teilweise geschnitten die erfindungsgemässe Rohrkupplung;
- Fig. 3 und 4: in einem Längsschnitt und vergrössert einen Teil der erfindungsgemässen Rohrkupplung, vor und nach der Montage an zu kuppelnde Rohre; und
- Fig. 5: in Ansicht einen Teil eines Federrings.

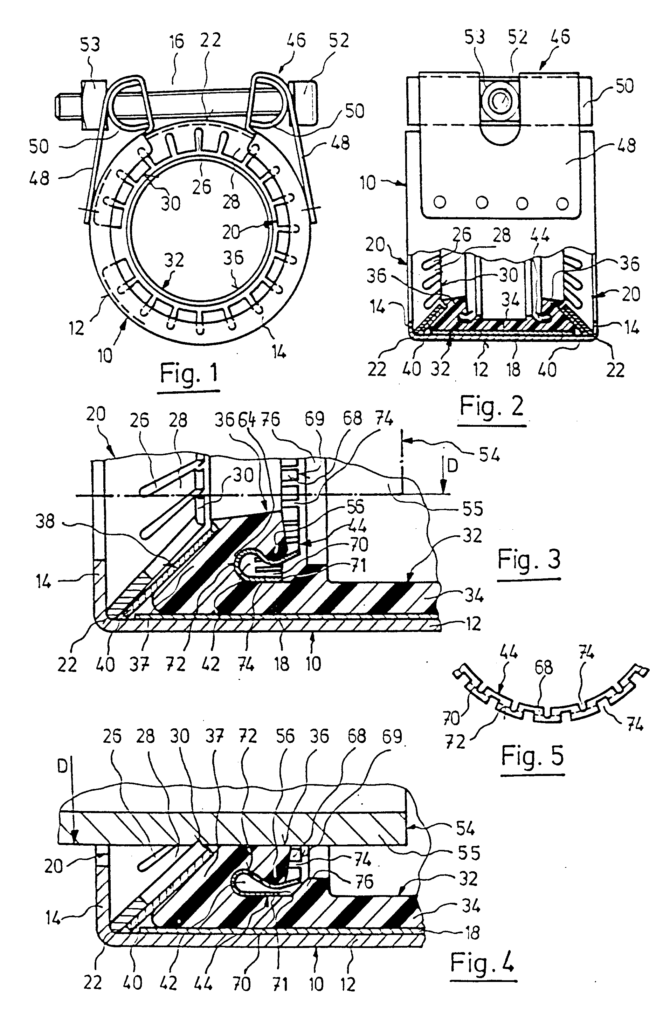

Das in den Fig. 1 und 2 dargestellte, der Länge nach gespaltene Gehäuse 10 besitzt einen zylindrischen Gehäusemantel 12 und einwärts gebogene radiale Endwände 14. Ein den Gehäusespalt 16 überbrückendes flaches Einlageblech 18 liegt an der Innenseite des Gehäusemantels 12 an. Das Einlageblech 18 ist bezüglich dem Gehäusespalt 16 selbstverständlich derart ausgerichtet, dass sein Längsspalt nicht im Bereich des Gehäusespaltes 16, sondern vorzugsweise diesem diametral gegenüberliegt.

Weiter weist die Rohrkupplung zwei kegelstumpfförmige und zu der Längsmitte des Gehäuses 10 hin konvergierend ausgebildete Spannringe 20 auf, die mit ihrem äusseren Rand 22 im Gehäuse 10 in der Kehle zwischen dem Gehäusemantel 12 und der jeweiligen Endwand 14 gehalten sind. Im inneren Randbereich weisen die Spannringe 20 eine Vielzahl durch schlitzartige Ausnehmungen 26 entstandene Lamellen 28 auf. Die freie Endkante 30 dieser Lamellen 28 bildet somit eine Kralle, die dazu bestimmt ist, sich in die Mantelfläche der miteinander zu verbindenden Rohrenden einzugraben und sich daselbst festzukrallen.

Im vom Gehäuse 10, dem Einlageblech 18 und den Spannringen 20 begrenzten Raum ist eine endlose, im Querschnitt C-förmige Elastomer-Dichtungs-Manschette 32 angeordnet, die mit ihrem Manschettensteg 34 am Einlageblech 18 bzw. Gehäusemantel 12 anliegt und deren Dichtlippen 36 sich gegeneinander erstrecken. Die Stirnseiten 38 der Manschette 32 sind durch je einen Schutzring 40 abgedeckt, welcher ein Einwandern der Manschette 32 in die Ausnehmungen 26 der Spannringe 20 bei höheren Temperaturen und Drücken verhindert.

Weiter ist in der vom Manschettensteg 34, der betreffenden Dichtlippe 36 und der Dichtlippenwurzel 37 begrenzten Ringnut 42 ein im Querschnitt U-förmiger, mäanderartiger Federring 44 vorhanden, um die Dichtlippe 36 am Manschettensteg 34 abzustützen.

Das Gehäuse 10 weist einen Verschluss 46 auf, bestehend aus am Gehäuse 10 angeschweissten Spannlaschen 48, von diesen umschlossenen, im Querschnitt U-förmigen Spannstäben 50 und einer Spannschraube 52 mit Mutter 53. Die lichte Weite der Rohrkupplung (Gehäuse 10, Manschette 32, Einlageblech 18, Spannringe 20, Stützringe 40, Federringe 44) ist in dem in den Fig. 1 bis 3 dargestellten Zustand so reichlich bemessen, dass gegenüber dem in der Fig. 3 mit einem Pfeil D angedeuteten Aussendurchmesser der Rohre 54 in jedem Fall ein Uebermass vorhanden ist, so dass die Kupplung leicht über das eine Rohr 54 geschoben und nach Verlegen der Rohre 54 auch auf das andere Rohrende hinübergeschoben werden kann. Durch das Anziehen der Spannschraube 52 lässt sich der Innendurchmesser des Gehäuses 10 wie bei einer Rohrschelle verkleinern, wobei der Gehäusespalt 16 verringert wird und das Einlageblech 18 immer mehr in das Gehäuse 10 eintaucht. Hierbei wird die Manschette 32 im Umfangssinne gestaucht, wobei die Federringe 44 und an den Dichtlippen 36 angeformte Ringwülste 56 die Dichtlippen 36 zur satten Auflage an die Rohrwandung 55 bringen, wie dies Fig. 4 erkennen lässt. Dabei verengen sich auch die endlichen Spannringe 20, die derart ausgebildet sind, dass sie bei vollständig zusammengezogenem Gehäuse 10 ungefähr eine Windung bilden. Beim Verengen des Gehäuses 10 verankern sich somit die freien Endkanten 30 der Lamellen 28 in der Rohrwandung 55 infolge der axialen als auch radialen Abstützung der Spannringe 20 am Gehäuse 10. Dadurch ist nicht nur die Rohrkupplung an den Rohren 54 fixiert, sondern auch die Rohre 54 werden am Herausrutschen aus der Rohrkupplung, beispielsweise infolge durch Innen-Druck des Leitungsmediums erzeugte axiale Kräfte, gehindert. In den Fig. 3 und 4 ist jeweils nur der eine Endbereich der Rohrkupplung gezeigt, der andere, axial gegenüberliegende Endbereich ist selbstverständlich genau gleich ausgebildet und funktioniert identisch.

Wie dies insbesondere aus der Fig. 3 hervorgeht, ist der Ringwulst 56 im an das freie Ende angrenzenden Endbereich der Dichtlippe 36 auf der dem Manschettensteg 34 zugewandten Seite an der Dichtlippe 36 angeformt, so dass die Ringnut 42 eine Art Hinterschneidung aufweist.

Der endlos ausgebildete und im Querschnitt U-förmige Federring 44 weist einen radial inneren Federschenkel 68, einen radial äusseren Federschenkel 70 und einen diese miteinander verbindenden Federsteg 72 auf. Bei in die Ringnut 42 eingesetztem Federring 44 liegt der Federsteg 72 am Bodenbereich 64 an und der radial äussere Federschenkel 70 endet in axialer Richtung gesehen in etwa auf gleicher Höhe wie die Dichtlippe 36. Der der Dichtlippe 36 zugewandte innere Federschenkel 68 ist allerdings in axialer Richtung länger ausgebildet, so dass er aus der Ringnut 42 hinaus über die Dichtlippe 36 vorsteht. Der äussere Federschenkel 70 liegt flächig am Manschettensteg 34 an. Der Federsteg 72 ist über einen Winkel von mehr als 180°, vorzugsweise um ungefähr 210°, gebogen und der radial innere Federschenkel 68 weist eine entgegengerichtete Biegung auf, so dass er den Ringwulst 56 der Dichtlippe 36 teilweise umgreift. Dadurch verhindert der Federring 44, dass bei verengtem Gehäuse 10 (Fig. 4) die Dichtlippe 36 bzw. der Ringwulst 56 den Manschettensteg 34 berühren und bei hohen Temperaturen mit diesem verkleben bzw. vulkanisieren kann.

Der Federring 44 weist eine Vielzahl von Schlitzen 74 auf, die in Umfangsrichtung gesehen abwechslungsweise vom Rand 69 des inneren Federschenkels 68 und vom Rand 71 des äusseren Federschenkels 70 ausgehen und sich im Bereich des Federstegs 72 überlappen, wie dies insbesondere aus der Fig. 5 erkennbar ist. Der Federring 44 weist somit Mäanderform auf und ist im Umfangssinne stauchbar.

Die Grösse des Federrings 44 ist derart gewählt, dass er bei nicht verspanntem Gehäuse 10 ohne Vorspannung in der Ringnut 42 liegt (Fig. 3). Beim Verengen des Gehäuses 10 verengt sich ebenfalls die Weite der Schlitze 74 durch Stauchen des Federrings 44. Die Weite der Schlitze 74 ist nun so gewählt, dass die Schlitze 74 bei verspanntem Gehäuse 10 auf eine vorgegebene Schlitzweite verengt, aber immer noch vorhanden sind, und diese minimale Schlitzweite ist dadurch bestimmt, dass bei weiterer Verengung der Schlitze 74 infolge der Wärmedehnung bei der höchsten zulässigen Betriebstemperatur die Schlitze 74 noch soweit vorhanden sind, als die nun verengte Ringnut 42 mit dem auf der anderen Seite des Ringswulstes 56 gelegenen Raum kommunizierend verbunden bleibt. Diese Ausbildung des Federrings 44 stützt die Dichtlippe 36 mit dem Ringwulst 56 am Manschettensteg 34 möglichst grossflächig ab.

Am Manschettensteg 34 sind den Ringnuten 42 vorgelagerte und diese übergreifende Ringrippen 76 angeformt, die einerseits das Ablösen des Manschettensteges 34 in drucklosem Zustand bzw. bei Unterdruck vom Einlageblech 18 verhindern und andererseits ein ungewolltes Herausgleiten des Federrings 44 aus der Ringnut 42 verunmöglichen.

Die Dichtlippe 36 wird vom Federring 44 unabhängig von der Alterung des Elastomermaterials der Manschette 32, immer sicher an der Rohrwandung 54' satt anliegend, gehalten. Dies auch bei einem eventuellen Unterdruck in den Rohren 54 und dem damit über den Rohrstoss kommunizierenden Innenraum der Rohrkupplung. Da das Ankleben der Dichtlippe 36 am Manschettensteg 34 und das Wegfliessen von Material der Manschette 32 bei hohen Temperaturen verhindert ist, sind für die erfindungsgemässe Rohrkupplung höhere Betriebstemperaturen zulässig als bei bekannten Rohrkupplungen.

Es ist selbstverständlich auch denkbar, nur den radial äusseren Federschenkel oder beide Federschenkel über die Dichtlippe 36 vorstehend auszubilden. Es ist auch möglich, einen die jeweilige Dichtlippe abstützenden Ringwulst am Manschettensteg anzuformen. Es ist auch denkbar, dass der ringwulstseitige Federschenkel vor dem Ringwulst endet, so dass der Ringwulst bei zusammengezogenem Gehäuse am anderen längeren Federschenkel zur Anlage kommt.

Der Federring kann als geschlossener Ring oder als offener, aus einem mäanderförmigen Band bestehender Ring ausgebildet werden, dessen Enden einander überlappen oder in gespanntem Zustand der Rohrkupplung stumpf aneinanderstossen. Letztere Ausführung erleichtert die Montage des Federrings in die Manschette. Ausserdem sind dabei erhebliche Material- und Kosteneinsparungen möglich.

## Patentansprüche

1. Rohrkupplung mit einer im Querschnitt C-förmigen Elastomer-Dichtungs-Manschette (32), deren sich gegeneinander erstreckende Dichtlippen (36) über einen Federring (44) auf dem Manschettensteg (34) abgestützt sind und die von einem durch einen Verschluss (46) verengbaren Gehäuse (10) und von einem zwischen Manschette (32) und Gehäuse (10) eingelegten, den Längsspalt (16) des Gehäuses (10) überbrückenden Einlageblech (18) umschlossen ist, wobei die Dichtlippen (36) der Manschette (32) vor dem Zusammenziehen des Gehäuses (10) in Bezug auf den Nenndurchmesser (D) der zu kuppelnden Rohre (54) Uebermass aufweisen und beim Zusammenziehen des Gehäuses (10) im Umfangssinne stauchbar und durch Druckwirkung der Federringe (44) satt an die Rohrwandung (55) anpressbar sind, dadurch gekennzeichnet, dass die Federringe (44) einen U-förmigen Querschnitt aufweisen, mit ihrem die Federschenkel (68, 70) miteinander verbindenden Federsteg (72) der jeweiligen Dichtlippenwurzel (37) zugewandt in der Ringnut (42) zwischen dem Manschettensteg (34) und den Dichtlippe (36) angeordnet sind, und vom Rand (69, 71) beider Federschenkel (68, 70) ausgehende Schlitze (74) aufweisen, die sich überlappen und die beim Zusammenziehen des Gehäuses (10) auf eine vorgegebene minimale Schlitzweite vergengbar sind um die Dichtlippen (36) grossflächig abzustützen.

2. Rohrkupplung nach Anspruch 1, dadurch gekennzeichnet, dass mindestens der eine, vorzugsweise der der Dichtlippe (36) zugeordnete Federschenkel (68) aus der Ringnut (42) das freie Ende der Dichtlippe (36) axial überragt.

3. Rohrkupplung nach Anspruch 2, dadurch gekennzeichnet, dass die Dichtlippen (36) bei zusammengezogenem Gehäuse (10) auf dem Manschettensteg (34) mittels eines Ringwulstes (56) abgestützt sind, der am das Ende der Dichtlippe (36) überragenden Federschenkel (68) anliegt.

4. Rohrkupplung nach Anspruch 3, dadurch gekennzeichnet, dass der Ringwulst (56) beim Ende der Dichtlippe (36) und an dieser auf der dem Manschettensteg (34) zugewandten Seite angeformt ist, und dass der der Dichtlippe (36) zugeordnete Federschenkel (68) den Ringwulst (56) umgreift.

5. Rohrkupplung nach einem der Ansprüche 1 bis 4, dadurch gekennzeichnet, dass am Manschettensteg (34) auf der Innenseite eine umlaufende Ringrippe (76) angeformt ist, die die Ringnut (42) mit Abstand übergreift.

6. Rohrkupplung nach einem der Ansrüche 1 bis 5, dadurch gekennzeichnet, dass der Federring (44) als offener Ring ausgebildet ist.

## Claims

1. Pipe coupling with an elastomer cup packing (32) of C-shaped cross-section whose sealing lips (36), which extend towards one another, are supported on the cup web (34) by way of a spring ring (44) and which is surrounded by a housing (10) that can be constricted by a closing means (46) and by an insertion plate (18) which is inserted between the cup (32) and the housing (10) and bridges the longitudinal gap (16) in the housing (10), the sealing lips (36) of the cup (32) exhibiting an oversize in relation to the nominal diameter (D) of the pipes (54) to be coupled before the housing (10) is tightened and can be compressed in a circumferential direction and pressed snugly against the pipe wall (55) by the pressure of the spring rings (44) when the housing (10) is tightened, characterized in that the spring rings (44) have a U-shaped cross-section, are arranged in the annular groove (42) between the cup web (34) and the sealing lip (36) with their spring web (72) facing the respective sealing-lip root (37) the said spring web connecting the spring legs (68, 70) to one another, and have slots (74) which start from the rim (69, 71) of both spring limbs (68, 70), overlap and can be constricted to a specified minimum slot width when the housing (10) is tightened in order to provide the sealing lips (36) with large-area support.

2. Pipe coupling according to Claim 1, characterized in that at least one of the spring limbs, preferably the spring limb (68) assigned to the sealing lip (36), projects out of the annular groove (42) and axially beyond the free end of the sealing lip (36).

3. Pipe coupling according to Claim 2, characterized in that, with the housing (10) tightened, the sealing lips (36) are supported on the cup web (34) by means of an annular bead (56) which rests on the spring limb (68) projecting beyond the end of the sealing lip (36).

4. Pipe coupling according to Claim 3, characterized in that the annular bead (56) is formed integrally at the end of the sealing lip (36) and on the latter on the side facing the cup web (34) and in that the spring limb (68) assigned to the sealing lip (36) engages around the annular bead (56).

5. Pipe coupling according to one of Claims 1 to 4, characterized in that an encircling annular rib (76) which overlaps the annular groove (42) with a clearance is formed integrally on the cup web (34) on the inside.

6. Pipe coupling according to one of Claims 1 to 5, characterized in that the spring ring (44) is designed as an open ring.

## Revendications

1. Raccord de tuyaux avec une manchette en élastomère (32) de section transversale en C, dont les lèvres d'étanchéité (36), s'étendant en vis-à-vis, sont supportées sur la traverse (34) de la manchette par l'intermédiaire d'une rondelle élastique (44), et qui est enveloppée par un corps (10), pouvant être resserré par une fermeture (46), et par une tôle de fourrure (18), insérée entre la manchette (32) et le corps (10), et pontant la fente longitudinale (16) du corps (10), les lèvres d'étanchéité (36) de la manchette (32) présentant une surmesure par rapport au diamètre nominal (D) des tuyaux (54) à accoupler, avant la contraction du corps (10), pouvant être écrasées dans le sens périphérique, lors de la contraction du corps (10), et être pressées à plat sur la paroi (55) des tuyaux, sous l'effet de la pression des rondelles élastiques (44), caractérisé en ce que les rondelles élastiques (44) présentent une section transversale en U, sont disposées par leur traverse de ressort (72), assemblant entre elles les branches de ressort (68, 70), dans la rainure annulaire (42) comprise entre la traverse (34) de la manchette et la lèvre d'étanchéité (36), en étant tournées vers la base respective (37) de ces dernières, et présentent des fentes (74), qui partent du bord (69, 71) des deux branches de ressort (68, 70), se chevauchent, et peuvent être rétrécies à une largeur minimale prédéfinie, lors de la contraction du corps (10), pour supporter les lèvres d'étanchéité (36) sur une grande portée.

2. Raccord de tuyaux suivant la revendication 1, caractérisé en ce que la branche de ressort (68), au moins, associée à la lèvre d'étanchéité (36) de préférence, dépasse dans le sens axial de l'extrémité libre de la lèvre d'étanchéité (36), en dehors de la rainure annulaire (42).

3. Raccord de tuyaux suivant la revendication 2, caractérisé en ce que les lèvres d'étanchéité (36), à l'état de contraction du corps (10), sont supportées sur la traverse (34) de la manchette au moyen d'un bourrelet annulaire (56), qui s'applique sur la branche de ressort (68), dépassant de l'extrémité de la lèvre d'étanchéité (36).

4. Raccord de tuyaux suivant la revendication 3, caractérisé en ce que le bourrelet annulaire (56) est conformé sur l'extrémité de la lèvre d'étanchéité (36), sur le côté de cette dernière tourné vers la traverse (34) de la manchette, et en ce que la branche de ressort (68), associée à la lèvre d'étanchéité (36), enserre le bourrelet annulaire (56).

5. Raccord de tuyaux suivant l'une quelconque des revendications 1 à 4, caractérisé en ce qu'une nervure périphérique (76) est conformée sur la traverse (34) de la manchette, côté interne, cette nervure recouvrant à distance la rainure annulaire (42).

6. Raccord de tuyaux suivant l'une quelconque des revendications 1 à 5, caractérisé en ce que la rondelle élastique (44) est réalisée sous forme de rondelle ouverte.
